# EUROPÄISCHE PATENTSCHRIFT

(11) **EP 4 244 570 B1**
(45) Veröffentlichungstag und Bekanntmachung des Hinweises auf die Patenterteilung: **23.07.2025**
(21) Anmeldenummer: 21810942.9
(22) Anmeldetag: 09.11.2021
(51) Int. Cl.: G01B 11/26, B25J 9/16

(54) **VORRICHTUNG UND VERFAHREN ZUR VERMESSUNG, INSPEKTION ODER BEARBEITUNG VON OBJEKTEN**
APPARATUS AND METHOD FOR MEASURING, INSPECTING OR PROCESSING OBJECTS
DISPOSITIF ET PROCÉDÉ POUR MESURER, INSPECTER OU TRAITER DES OBJETS

(30) Priorität: 11.11.2020 DE 102020129743
(43) Veröffentlichungstag der Anmeldung: 20.09.2023
(73) Patentinhaber: Carl Zeiss AG, 73447 Oberkochen (DE)
(72) Erfinder: KARL, Matthias, 89551 Königsbronn (DE); NGUYEN CONG, Trinh, 73525 Schwäbisch Gmünd (DE); FORSTENHÄUSLER, Marc, 89077 Ulm (DE)
(74) Vertreter: Kraus & Lederer PartGmbB
(86) Internationale Anmeldenummer: PCT/EP2021/081060
(87) Internationale Veröffentlichungsnummer: WO 2022/101178

(56) Entgegenhaltungen:
- WO-A1-2019/146201
- DE-A1- 102016 109 919
- DE-U1- 202017 001 227

## Beschreibung

Die vorliegende Anmeldung betrifft Vorrichtungen und Verfahren zum Vermessen, Inspizieren oder Bearbeiten von Objekten, welche insbesondere in der industriellen Fertigung von Objekten wie beispielsweise Kraftfahrzeugen, Flugzeugen, Komponenten hiervon oder zur Vermessung industrieller Einrichtungen einsetzbar sind, jedoch nicht hierauf beschränkt sind.

In der Industrie sind verschiedene Vorrichtung und Verfahren zum Vermessen und Bearbeiten von Objekten bekannt. Derartige Vorrichtungen und Verfahren können beispielsweise zur Endkontrolle eines hergestellten Produkts, zur Kontrolle während der Fertigung oder zur Bearbeitung eines Produkts während der Fertigung dienen.

Ein Beispiel für derartige Vorrichtungen sind Koordinatenmessgeräte. Derartige Koordinatenmessgeräte umfassen üblicherweise ein Messkopfsystem mit einem Sensor zum Vermessen des Objekts bzw. ein Positioniersystem, mit welchem der Messkopf an einem zu vermessenden Objekt entlang bewegt werden kann. Herkömmliche Koordinatenmessgeräte sind stationär und erfordern, dass das Koordinatenmessgerät größer als das Zielobjekt, welches in diesem Fall auch als Messobjekt bezeichnet wird, ist. Zudem muss das Zielobjekt zu dem Koordinatenmessgerät gebracht werden.

Die DE 10 2016 109 919 A1 offenbart diesbezüglich eine Vorrichtung zum Vermessen von Objekten, bei welcher ein Messkopf an einem Messroboter angebracht ist, welcher auf einer mobilen Plattform positioniert ist. Auf diese Weise kann der Messroboter mittels der mobilen Plattform zu dem Objekt gebracht werden und dann das Objekt vermessen. Dabei werden verschiedene Sensoren verwendet, um die Plattform und den Messroboter zu positionieren.

Eine genaue Positionierung des Messkopfes ist insbesondere dann erforderlich, wenn bestimmte Stellen des Objekts, z. B. nur einzelne Stellen, zu vermessen sind. Hierbei ist auch eine schnelle und zielgenaue Positionierung wichtig, um einen ausreichenden Durchsatz in einer industriellen Fertigung zu erzielen.

Die US 2019 / 0 291 275 A1 offenbart ein Verfahren für einen Roboter mit einer mobilen Plattform, bei dem basierend auf einem CAD-Modell des Objekts eine Vielzahl von Wegpunkten basierend auf einer Reichweite eines Roboterarms errechnet werden und ein Roboter entsprechend bewegt wird. Der Roboterarm ist dabei auf einer mobilen Plattform angeordnet und verfügt über verschiedene Sensoren. Hier müssen also entsprechende Wegpunkte berechnet werden.

Die DE 10 2018 008 209 A1 offenbart ein weiteres Verfahren zum Positionieren eines mobilen Roboters im Zusammenwirken mit einer Montagelinie, die ein zu bearbeitendes Objekt weiter bewegt. Dazu werden sogenannte "Virtual Gap Points" einer Kontur des Objekts bestimmt.

Weitere Vorrichtungen und Verfahren zum Positionieren von Robotern mit Messköpfen sind aus der EP 2 869 157 A1 oder der US 2019 / 0 321 977 A1 bekannt.

Ähnliche Probleme treten auch bei der zielgenauen Bearbeitung von Objekten auf. In diesem Fall ist zusätzlich oder alternativ zu dem Messkopf ein entsprechendes Bearbeitungswerkzeug an dem Roboterarm angebracht. Ansonsten gilt das Gleiche wie oben zu der Vermessung Gesagte.

Ausgehend von den bekannten Verfahren ist es eine Aufgabe der vorliegenden Erfindung, verbesserte Vorrichtungen und Verfahren zu schaffen, mit denen eine schnellere und/oder genauere Positionierung eines Roboterarms relativ zu einem Objekt möglich ist.

Erfindungsgemäß werden eine Vorrichtung nach Anspruch 1 sowie ein Verfahren nach Anspruch 10 bereitgestellt. Die Unteransprüche definieren weitere Ausführungsformen.

Es wird eine Vorrichtung zur Vermessung, Inspektion und/oder Bearbeitung von Objekten bereitgestellt, welche eine mobile Plattform zum Bewegen der Vorrichtung durch einen Raumbereich, eine an der mobilen Plattform angebrachte Kinematik und einen an der Kinematik angebrachten Instrumentenkopf aufweist. Die Kinematik ist eingerichtet, den Instrumentenkopf relativ zu der mobilen Plattform zu bewegen.

Des Weiteren weist die Vorrichtung mindestens einen Sensor auf. Schließlich weist die Vorrichtung eine Steuerung auf, welche eingerichtet ist, eine erste Abschätzung einer Pose eines Zielobjekts auf Basis von Signalen von dem mindestens einen Sensor zu bestimmen, die mobile Plattform auf Basis der ersten Abschätzung anzusteuern, sich zu dem Objekt zu bewegen, eine zweite, genauere (d. h. genauer als die erste Abschätzung) Abschätzung der Pose des Zielobjekts auf Basis von Signalen von dem mindestens einen Sensor zu bestimmen, wobei das Bestimmen der ersten Abschätzung und/oder das Bestimmen der zweiten Abschätzung zudem auf Basis einer digitalen Repräsentation des Zielobjekts erfolgt, und die Kinematik anzusteuern, den Instrumentenkopf auf Basis der zweiten Abschätzung an dem Zielobjekt zu positionieren.

Auf diese Weise kann eine genaue Positionierung des Instrumentenkopfs an dem Objekt erreicht werden. Beispielsweise kann die Positioniergenauigkeit bei manchen Ausführungsbeispielen im Bereich von 0,1 mm liegen.

Unter einer mobilen Plattform ist dabei eine Einrichtung zu verstehen, mittels der die Vorrichtung bewegbar ist. Hierzu kann die mobile Plattform beispielsweise Räder mit einem Antrieb aufweisen. Bei einem anderen Ausführungsbeispiel kann die mobile Plattform eine schienengebundene mobile Plattform sein, die sich auf Schienen durch den Raumbereich bewegt.

Mit Zielobjekt wird im Rahmen dieser Anmeldung ein Objekt bezeichnet, an dem Messungen durchzuführen sind und/oder welches bearbeitet werden soll.

Unter einer Kinematik ist eine bewegliche Einrichtung zu verstehen, die den Instrumentenkopf bewegen kann. Ein Beispiel für eine derartige Kinematik ist ein Roboterarm.

Unter einer Pose ist die Kombination aus Position und Orientierung zu verstehen, wie dies beispielsweise in der DIN ISO 8373, 2. Auflage vom 3. Dezember 2012, unter 4.5 definiert ist. Die Pose kann beispielsweise in drei Translationskoordinaten, welche die Position eines Objekts angeben, und drei Winkelkoordinaten, welche die Ausrichtung angeben, angegeben werden.

Unter einer digitalen Repräsentation sind Daten zu verstehen, welche die Form des Objekts angeben. Eine derartige digitale Repräsentation kann beispielsweise ein 3D-Modell des Objekts sein, welches auf Basis von Messungen an einem Beispielobjekt erstellt wurde, und/oder es können CAD ("computer aided design")-Daten des Objekts sein. Zu bemerken ist, dass diese digitale Repräsentation nicht exakt mit dem Objekt übereinstimmen muss. Insbesondere kann die digitale Repräsentation eine Soll-Form des Objekts widergeben, und bei manchen Ausführungsformen kann die Vorrichtung dann verwendet werden, um bei einer Vermessung Abweichungen von dieser Soll-Form zu detektieren (z. B. fehlende Bohrungen oder Verformungen). Die digitale Repräsentation kann optional eine Textur des Objekts beinhalten, welche dann zu der Bestimmung der Abschätzung der Pose zusätzlich herangezogen werden kann.

Allgemein ist zu bemerken, dass Begriffe wie "ein Bild" nicht ausschließt, dass auch weitere Bilder oder ein Video, d. h. eine Abfolge von Bildern, zur Abschätzung herangezogen werden.

Ein Instrumentenkopf umfasst allgemein ein oder mehrere Sensoren zum Vermessen oder Inspizieren des Zielobjekts und/oder ein oder mehrere Werkzeuge zum Bearbeiten des Zielobjekts.

Unter einem Messen wird dabei insbesondere eine quantitative Vermessung verstanden (z. B. Messung einer Länge), während ein Inspizieren qualitativ sein kann, beispielsweise das Vorhandensein bestimmter Merkmale, wie z. B. Bohrlöchern, überprüfen kann oder Defekte wie Risse erkennen kann, ohne diese quantitativ zu vermessen, oder eine Vollständigkeitsanalyse durchführen. Ein derartiges Inspizieren kann insbesondere zur Qualitätssicherung zum Einsatz kommen.

Der mindestens eine Sensor, dessen Signale zur ersten Abschätzung verwendet werden, kann beispielsweise eine Kamera wie eine Weitfeldkamera umfassen. In diesem Fall entsprechen die Signale von dem Sensor einem aufgenommenen Bild. Der mindestens eine Sensor kann zusätzlich oder alternativ auch einen LIDAR-Sensor umfassen, wobei insbesondere auch ein LIDAR-Sensor kombiniert mit einer Kamera verwendbar ist.

Die Steuerung kann weiter eingerichtet sein, vor dem Bestimmen der ersten Abschätzung das Zielobjekt in dem Bild zu identifizieren und die erste Abschätzung dann auf Basis des identifizierten Objekts zu bestimmen. Auch LIDAR-Messungen können auf Basis des identifizierten Objekts durchgeführt werden. Hierzu können herkömmliche Verfahren zur Bilderkennung zum Einsatz kommen. Auch kann die digitale Repräsentation zur Identifizierung herangezogen werden. Durch eine derartige Identifizierung kann die Abschätzung der Pose erleichtert werden.

Ein Überblick über verschiedene Verfahren zur Posenabschätzung, die hier z. B. für die erste Abschätzung zum Einsatz kommen können, ist in T. Hodan et al., "BOP: Benchmarkň of 6d object pose estimation", European Conference on Computer Vision (ECCV) 2018, zu finden.

Die Steuerung kann weiter eingerichtet sein, vor dem Bestimmen der ersten Abschätzung eine Distanz des Zielobjekts zu der Vorrichtung auf Basis einer Messung des mindestens einen Sensors zu bestimmen. Hierzu kann der mindestens eine Sensor beispielsweise einen LIDAR-Sensor, einen Radarsensor oder einen anderen zur Abstandsmessung geeigneten Sensor wie einen Laufzeitsensor (TOF, "time of flight") aufweisen. Die Distanzbestimmung kann dann in die Abschätzung der Pose einfließen, da dann beispielsweise aus den Abmessungen des Objekts aus der digitalen Repräsentation bekannt ist, wie groß das Objekt in dem Bild erscheint und somit die Detektion erleichtert werden kann. Zudem kann auf Basis der Distanz die Bewegung der mobilen Plattform bestimmt werden.

Die Steuerung ist weiter eingerichtet sein, die Pose des Zielobjekts, z.B. gemäß der ersten Abschätzung während dem Bewegen der mobilen Plattform und/oder während dem Bewegen der Kinematik nachzuverfolgen, wobei dieses Merkmal bei anderen Ausführungsformen auch weggelassen sein kann. In anderen Worten kann die Pose laufend während der Bewegung angepasst werden, um so die Bewegung korrigieren zu können. Dies kann insbesondere hilfreich sein, wenn sich das Zielobjekt während der Bewegung selbst bewegt. Dabei kann insbesondere eine bereichsbasierte Nachverfolgung ("region-based tracking") verwendet werden. Eine derartige bereichsbasierte Nachverfolgung ist beispielsweise in H. Tjaden et al., "A Region-based Gauss-Newton Approach to Real-Time Monocular Multiple Object Tracking", IEEE transactions on pattern analysis and machine intelligence 41.8 (2018), Seiten 1797-1812 beschrieben.

Die Steuerung kann auch eine trainierte Maschinenlernlogik zum Bestimmen der ersten Abschätzung und/oder der zweiten Abschätzung umfassen. Unter einer Maschinenlernlogik ist dabei eine Vorrichtung, insbesondere eine Recheneinrichtung, zu verstehen, welche mit Verfahren des maschinellen Lernens trainiert wurde. Beispiele umfassen trainierte neuronale Netze wie CNNs ("convolutional neural networks"), neuronale Netze mit einer Vielzahl von Schichten, einschließlich verborgener Schichten oder unterstützte Vektormaschinen ("support vector machines"). Zum Trainieren einer derartigen Maschinenlernlogik können der Maschinenlernlogik Bilder und digitale Repräsentationen von Beispielobjekten zugeführt werden, wobei dann die Pose des Objekts mittels Koordinaten (drei Translationskoordinaten und drei Winkel) oder auf andere Weise, beispielsweise mittels Koordinaten von Eckpunkten eines Quaders oder anderen Körpers, der das Objekt umschreibt, bereitgestellt werden. Diese Koordinaten sind dann in trainiertem Zustand das Ergebnis, wenn entsprechende Bilder und digitale Repräsentationen der trainierten Maschinenlernlogik zugeführt werden. Dabei können zum Training insbesondere Ansichten von Objekten aus verschiedenen Richtungen berücksichtigt werden, und eine große Anzahl an Bildern, beispielsweise ungefähr 10000 Bilder, verwendet werden. So ist es möglich, eine Pose eines Objekts aus unterschiedlichen Richtungen, bei Verdeckungen und/oder bei unterschiedlichen Lichtverhältnissen zu erkennen.

Das Bestimmen der zweiten Abschätzung kann auf Basis des Bildes oder eines weiteren Bildes, beispielsweise eines nach dem Bewegen der Plattform aufgenommenen Bildes des Zielobjekts, der digitalen Repräsentation und der ersten Abschätzung erfolgen. Die erste Abschätzung wird somit als Basis für die zweite Abschätzung verwendet, was eine schrittweise Verfeinerung der Bestimmung der Pose ermöglicht. Auch hier kann zudem eine Nachverfolgung stattfinden. Hierzu können Optimierungsverfahren wie beispielsweise eine "Directional Chamfer"-Optimierung wie beispielsweise Direct Directional Chamfer Optimierung (D²CO) verwendet werden. Auf diese Weise ist eine genaue Bestimmung der Pose auch bei vergleichsweise komplexen Objekten möglich. Das D²CO-Verfahren eignet sich dabei beispielsweise auch für glänzende Oberflächen. Eine Beschreibung des Verfahrens findet sich beispielsweise in M. Imperoli und A. Pretto," D2CO: Fast and Robust Registration of 3D Textureless Objects using the Directional Chamfer Distance" Proceedings of the 10th international conference on computer vision systems (ICVS), 2015, S. 316ff. Es können jedoch auch andere Algorithmen verwendet werden. Derartige Algorithmen können beispielsweise parallelisiert auf Grafikprozessoren implementiert werden.

Entsprechende Verfahren zur Steuerung einer Vorrichtung zur Vermessung und/oder Bearbeitung von Objekten, welche eine mobile Plattform zum Bewegen der Vorrichtung durch einen Raumbereich und eine an der mobilen Plattform angebrachte Kinematik mit einem an der Kinematik angebrachten Instrumentenkopf und einen Sensor umfassen, werden zudem bereitgestellt. Ein derartiges Verfahren umfasst ein erstes Abschätzen einer Pose eines Zielobjekts auf Basis von Signalen von einem Sensor, ein Ansteuern der mobilen Plattform, sich zum Objekt zu bewegen, ein zweites, genaueres Abschätzen der Pose des Zielobjekts auf Basis von Signalen von dem mindestens einen Sensor, wobei das Bestimmen der ersten Abschätzung und/oder das Bestimmen der zweiten Abschätzung zudem auf Basis einer digitalen Repräsentation des Zielobjekts erfolgt, und ein Ansteuern der Kinematik auf Basis der zweiten Abschätzung, um den Instrumentenkopf an dem Zielobjekt zu positionieren.

Die Erfindung wird nachfolgend unter Bezugnahme auf die beigefügten Zeichnungen näher erläutert. Es zeigen:
Fig. 1 ein Anwendungsbeispiel einer erfindungsgemäßen Vorrichtung,
Fig. 2 ein Blockdiagramm einer Vorrichtung gemäß einem Ausführungsbeispiel,
Fig. 3 ein Flussdiagramm eines Verfahrens gemäß einem Ausführungsbeispiel,
Fig. 4 ein Flussdiagramm eines Verfahrens gemäß einem weiteren Ausführungsbeispiel,
Fig. 5 ein Flussdiagramm eines Verfahrens gemäß einem weiteren Ausführungsbeispiel zusammen mit erläuternden Figuren,
Fig. 6 ein neuronales Netzwerk, wie es bei manchen Ausführungsbeispielen verwendet werden kann,
Fig. 7A und 7B Ansichten zur Erläuterung der Funktionsweise des neuronalen Netzwerks der Fig. 6,
Fig. 8 ein Diagramm zur Veranschaulichung des Nachverfolgens einer Pose,
Fig. 9 ein Diagramm zur Veranschaulichung eines Verfahrens zum genaueren Abschätzen einer Pose,
Fig. 10 ein detaillierteres Implementierungsbeispiel des Verfahrens der Fig. 9, und
Fig. 11 ein Flussdiagramm eines Verfahrens zum genaueren Bestimmen einer Pose gemäß einem Ausführungsbeispiel.

Im Folgenden werden verschiedene Ausführungsbeispiele detailliert erläutert. Diese dienen lediglich der Veranschaulichung und sind nicht als einschränkend auszulegen.

Während Ausführungsbeispiele mit einer Vielzahl von Merkmalen beschrieben werden, sind nicht alle diese Merkmale (z. B. Elemente, Komponenten, Verfahrensschritte, Vorgänge, Algorithmen etc.) zur Ausführung notwendig, und andere Ausführungsbeispiele können alternative Merkmale oder zusätzliche Merkmale enthalten, oder es können manche Merkmale weggelassen sein. Beispielsweise werden spezifische Algorithmen und Verfahren zur Posenbestimmung dargestellt, wobei bei anderen Ausführungsbeispielen auch andere Algorithmen und Verfahren verwendet werden können.

Merkmale verschiedener Ausführungsbeispiele können miteinander kombiniert werden, sofern nichts anderes angegeben ist. Variationen und Abwandlungen, die für eines der Ausführungsbeispiele beschrieben werden, sind auch auf andere Ausführungsbeispiele anwendbar.

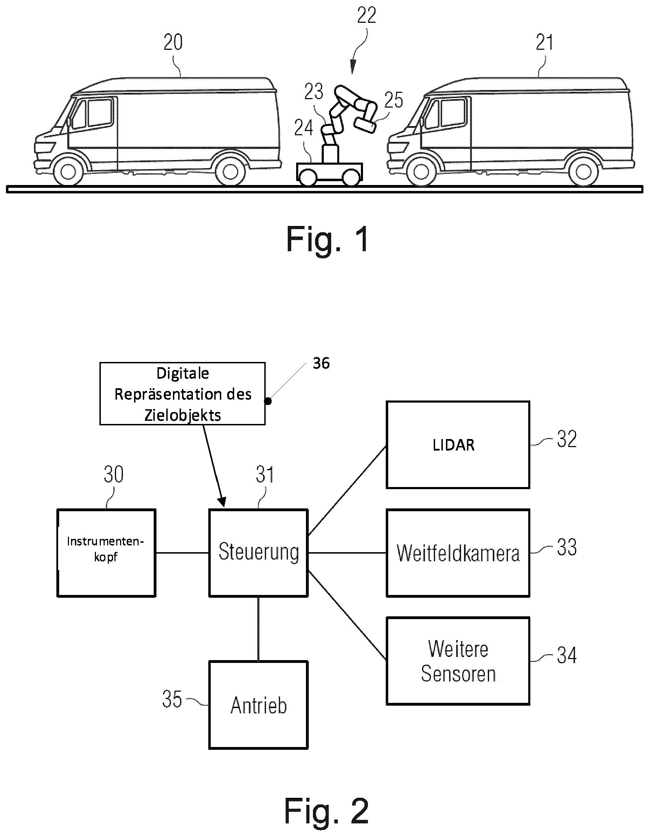

In Fig. 1 ist ein Ausführungsbeispiel einer Vorrichtung 22 zur Vermessung von Objekten, beispielsweise Kraftfahrzeugen 20, 21, dargestellt. Die Kraftfahrzeuge 20, 21 sind lediglich ein Beispiel für Objekte, und es können auch andere Arten von Objekten, beispielsweise Teile von Kraftfahrzeugen, Teile anderer Vorrichtungen oder dergleichen als Zielobjekt zur Vermessung und/oder Bearbeitung dienen. Auch wenn eine Vermessung hier als Beispiel verwendet wird, kann statt der Vermessung oder zusätzlich hierzu auch eine Bearbeitung oder eine Inspektion von Objekten stattfinden.

Die Vorrichtung 22 umfasst eine mobile Plattform 24 mit Rädern, Raupenketten, oder anderen Möglichkeiten zur Fortbewegung und einen Antrieb, sodass die Vorrichtung 22 durch einen oder mehrere Räume oder auch im Freien zu vermessenden Objekten 22, 21 fahren kann. Die mobile Plattform 24 stellt ein Beispiel für eine mobile Plattform, wie sie in Ausführungsbeispielen verwendbar ist, dar. Dieses Fahren kann, wie später noch erläutert werden wird, mittels einer Steuerung autonom durch die Vorrichtung 22 erfolgen.

Des Weiteren weist die Vorrichtung 22 einen Messkopf 25 auf, welcher an einer Kinematik 23, beispielsweise einem Roboterarm, angebracht ist. Mittels der Kinematik 23 kann der Messkopf 25 genau an dem jeweils zu vermessenden Objekt (d. h. dem jeweiligen Zielobjekt), beispielsweise den Kraftfahrzeugen 20 oder 21, positioniert werden. Wie im Folgenden erläutert werden wird, wird zur Steuerung der Vorrichtung 22 eine Pose des Objekts, d. h. dessen Lage und Orientierung im Raum, bestimmt und der Messkopf 25 entsprechend ausgerichtet, d. h. auch die Pose des Messkopfes relativ zum Objekt festgelegt. Dabei kommt es letztendlich nur auf die Relativposition von Messkopf und Objekt an. Daher sind die folgenden Ausführungen, wie die Vorrichtung 22 gesteuert wird, um den Messkopf 25 an dem Objekt 20 oder 21 zu positionieren, stets als Positionierung relativ zum Objekt zu verstehen. Eine derartige Bewegung und Positionierung wird auch als differenzielle Bewegung bezeichnet, da sie nicht in einem absoluten, festen Koordinatensystem stattfinden muss, sondern eben nur zwei Objekte, Messkopf 25 und Objekt 20 oder 21, relativ zueinander positioniert.

Mittels des Messkopfs 25, auch als Sensorkopf bezeichnet, wird dann die eigentliche Messung durchgeführt. Hierzu kann der Messkopf 25 beispielsweise einen konfokalchromatischen Multispotsensor (CCMS), eine andere Art von optischem Sensor, einen taktilen Sensor oder jeden anderen geeigneten Sensor umfassen, um eine gewünschte Messung an dem zu vermessenden Objekt vornehmen zu können. Falls statt einer Vermessung eine Bearbeitung des Objekts vorzunehmen ist, können entsprechende Bearbeitungswerkzeuge bereitgestellt sein. Allgemein kann diesbezüglich der Messkopf 25 als Instrumentenkopf bezeichnet werden, der einen oder mehrere Sensoren und/oder ein oder mehrere Werkzeuge, beispielsweise zum Schrauben, Bohren, Nieten, Kleben, Löten oder Schweißen, aufweist.

Statt eines Roboters können auch andere Kinematiken verwendet werden, beispielsweise eine autonome Ständermessmaschine. Während die mobile Plattform hier mit Rädern dargestellt ist, sind auch andere Lösungen wie beispielsweise eine fest eingebaute mobile Plattform, welche auf Schienen fährt, möglich. Letzteres ist insbesondere dann eine mögliche Herangehensweise, wenn ein Bereich beispielsweise innerhalb einer Fabrikhalle, in der die Messungen durchgeführt werden sollen, gut definiert ist, sodass ein Verfahren auf Schienen ebenso möglich ist.

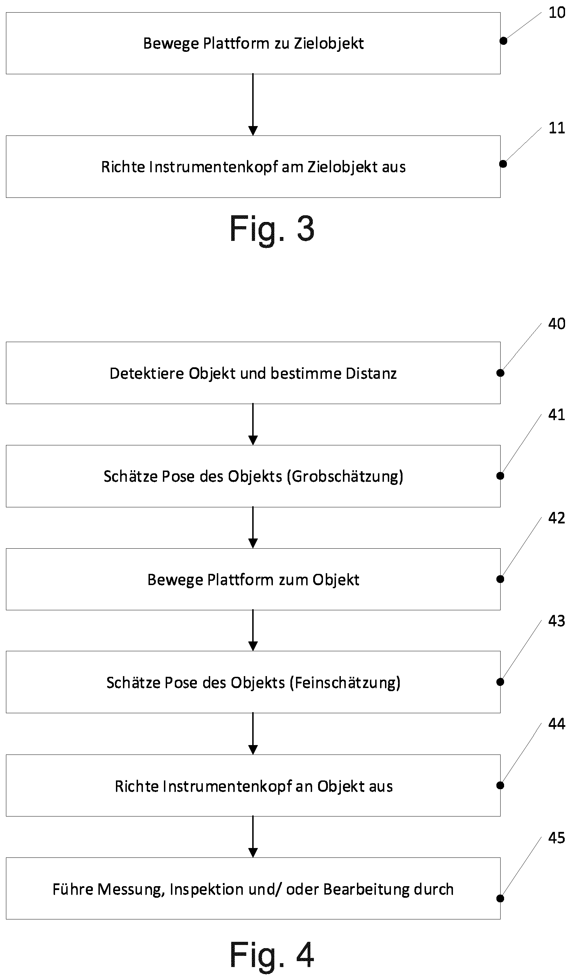

Um dies weiter zu erläutern, zeigt Fig. 2 ein Blockdiagramm, anhand dessen ein Beispiel für einen Aufbau einer Vorrichtung wie der Vorrichtung 22 näher erläutert wird. Die Funktionsweise der Vorrichtung und Verfahren zum Betreiben der Vorrichtung werden dann unter Bezugnahme auf die Fig. 3 bis 11 erläutert. Bei dem Ausführungsbeispiel der Fig. 2 umfasst eine Vorrichtung zur Vermessung von Objekten einen Instrumentenkopf 30, welcher beispielsweise wie für den Messkopf 25 erläutert einen oder mehrere Sensoren zur Vermessung der Zielobjekte umfasst, und/oder eines oder mehrere Werkzeuge zur Bearbeitung von Zielobjekten umfasst. Die Messung und/oder Bearbeitung wird durch eine Steuerung 31 gesteuert. Die Steuerung 31 kann hierzu beispielsweise eine oder mehrere Mikrosteuerungen, Mikroprozessoren und dergleichen aufweisen, welche durch ein entsprechendes Computerprogramm programmiert sind, die Vorrichtung zu steuern und nachfolgend noch näher erläuterte Funktionen auszuführen. Auch eine Implementierung ganz oder teilweise durch anwendungsspezifische Hardware ist möglich. Zu bemerken ist, dass die Steuerung 31 der Vorrichtung nicht vollständig auf der mobilen Plattform 24 implementiert sein muss. Vielmehr kann auch ein Teil der Steuerungsaufgaben, beispielsweise Berechnungen, in einer externen Recheneinrichtung wie einem Computer erfolgen und an eine Steuerungskomponente auf der Plattform über eine geeignete Schnittstelle, beispielsweise eine Funkschnittstelle, übertragen werden.

Des Weiteren umfasst die Vorrichtung der Fig. 2 einen Antrieb 35, welcher beispielsweise benutzt wird, um die mobile Plattform 24 der Fig. 1 zu bewegen. Der Antrieb 35 wird dabei von der Steuerung 31 gesteuert. Für diese Steuerung des Antriebs und die Ansteuerung einer Kinematik wie der Kinematik 22 der Fig. 1 kann die Vorrichtung über verschiedene Sensoren verfügen. Als Beispiel sind ein LIDAR-Sensor 32 ("light detection and ranging") und eine Weitfeldkamera 33, beispielsweise eine Fischaugenkamera oder eine Weitwinkelkamera, dargestellt. Zudem können weitere Sensoren 34, beispielsweise Beschleunigungssensoren, Winkelsensoren, Kombinationen hiervon, z. B. sogenannte inertiale Messeinheiten (IMUs, "inertial measurement units"), Magnetometer, ein Thermometer zur Temperaturkompensation, weitere Kameras, beispielsweise eine hochauflösende Kamera mit kleinerem Bildwinkel als die Weitfeldkamera 33 und dergleichen in der Vorrichtung, z. B. an der Kinematik 23, bereitgestellt sein. Als weiterer Sensor kann auch noch eine musterbasierte Projektionskamera eingesetzt werden, wie sie beispielsweise in Gestenerkennungssystemen eingesetzt wird. Bei anderen Ausführungsbeispielen können die Sensoren ein Navigationssystem umfassen, beispielsweise ein differenzielles GPS ("global positioning system") oder dergleichen. Auch Odometriedaten z. B. von Rädern der mobilen Plattform können gemessen werden. Die Sensoren 32-34 können verschiedene Aktualisierungsraten aufweisen. Messdaten verschiedener Sensoren können in Kombination miteinander verwendet werden, wofür herkömmliche Verfahren der Sensorfusion angewendet werden können.

Die Steuerung 31 erhält zusätzlich eine digitale Repräsentation des Zielobjekts, beispielsweise der Objekte 20, 21 der Fig. 1 oder zu bearbeitender Teile hiervon. Auf Basis der digitalen Repräsentation 36 des Zielobjekts und Daten von den Sensoren 32 bis 34 steuert die Steuerung 31 den Antrieb 35 und die Kinematik 23, um den Messkopf 25 bzw. den Instrumentenkopf 30 an dem Zielobjekt, beispielsweise den Objekten 20, 21 der Fig. 1, zu positionieren.

Verschiedene Verfahren und Techniken hierfür, welche in der Steuerung 31 implementiert werden können, werden nunmehr unter Bezugnahme auf die Fig. 3 bis 11 erläutert.

Die Fig. 3 zeigt grob einen Ablauf von Verfahren gemäß verschiedener Ausführungsbeispiele.

In Schritt 10 wird die Plattform zu dem Zielobjekt bewegt, d. h. dem Objekt, welches zu bearbeiten und/oder zu vermessen ist. Wie später erläutert, kann dies auf Basis einer ersten, gröberen, Abschätzung der Pose des Objekts erfolgen. In Schritt 11 wird dann ein Instrumentenkopf wie der Instrumentenkopf 30 der Fig. 2 am Zielobjekt ausgerichtet. Dies kann, wie später näher erläutert werden wird, auf Basis einer genaueren Abschätzung der Pose des Objekts erfolgen. Das Zielobjekt wird im Folgenden auch kurz einfach als Objekt bezeichnet.

Als Nächstes wird unter Bezugnahme auf die Fig. 4 ein detaillierterer Verfahrensablauf erläutert.

In Schritt 40 wird das Objekt detektiert, und die Distanz zu dem Objekt wird bestimmt. Hierzu kann eine Bildaufnahme, beispielsweise durch die Weitfeldkamera 33 der Fig. 3, sowie insbesondere zur Distanzmessung der LIDAR-Sensor 32 der Fig. 2 herangezogen werden. Zur Objektdetektion können Techniken des maschinellen Lernens eingesetzt werden, wie YOLO("you only look once")-Verfahren oder R-CNN, Fast R-CNN und Faster R-CNN-Verfahren. Mit derartigen Herangehensweisen kann das Vorhandensein des Zielobjekts festgestellt werden und dessen Position mit einer Genauigkeit beispielsweise im Bereich 100 mm, je nach Objektart und Objektgröße, festgestellt werden. Diese und andere Zahlenwerte, die hier gegeben werden, dienen dabei lediglich der Veranschaulichung und sind nicht als einschränkend auszulegen.

In Schritt 41 wird dann die Pose des Objekts geschätzt, was im Folgenden auch als Grobschätzung bezeichnet wird, um sie von der später in Schritt 43 erfolgenden Feinschätzung zu unterscheiden. Der Begriff "Schätzung" oder "abschätzen" bringt dabei zum Ausdruck, dass die Bestimmung mit einer gewissen Unsicherheit behaftet ist, die bei der Grobschätzung des Schritts 41 größer ist als später bei der Feinschätzung des Schritts 43. Hierzu kann wiederum ein Kamerabild herangezogen werden, wobei die Kamera sowohl an der mobilen Plattform als auch am Instrumentenkopf angebracht sein kann. Die Kamera kann die gleiche Kamera wie in Schritt 40 sein, oder es kann hierzu eine separate Kamera verwendet werden, die beispielsweise einen kleineren Bildwinkel aufweist und auf das Objekt, welches in Schritt 40 detektiert wurde, ausgerichtet wird. Zudem wird hier die digitale Repräsentation des Objekts herangezogen, aus der die Form des Objekts ersichtlich ist. Bei manchen Ausführungsbeispielen erfolgt dabei zusätzlich eine Segmentierung des Objekts, bei der beispielsweise die Kontur des Objekts in dem Bild bestimmt wird. Die Schätzung der Pose und auch das Segmentieren, soweit angewendet, kann wiederum mit Techniken des maschinellen Lernens erfolgen, beispielsweise mit einem sogenannten "Single Shot Approach, PVNet oder Dense Fusion-Verfahren. Derartige Verfahren sind beispielsweise in S. Peng et al., "PVNet: Pixel-wise Voting Network for 6DoF Pose Estimation", arXiv 1812.11788, Dezember 2018, C. Wang et al., "DenseFusion: 6D Object Pose Estimation by Iterative Dense Fusion", arXiv 1901.04780, Januar 2019, oder K. Kleeberger und M. Huber, "Single Shot 6D Object Pose Estimation", arXiv 2004.12729, April 2020, beschrieben.

Mit derartigen Verfahren kann die Pose des Objekts mit einer Genauigkeit im Bereich ±10 mm bis ±50 mm für Objektdurchmesser von ca. 1m bestimmt werden. Die erreichbare Genauigkeit kann dabei von der Objektgröße abhängen.

Die so bestimmte Pose kann nachverfolgt werden, insbesondere in Echtzeit nachverfolgt werden, um Änderungen der Pose des Objekts berücksichtigen zu können. Hier kann eine bereichsbasierte Objektnachverfolgung benutzt werden, welche beispielsweise lokale Farbhistogramme von Bildaufnahmen benutzt, die über die Zeit ausgewertet werden, und zur Nachverfolgung der Pose mit einem Gauß-Newton-Verfahren optimiert werden. Eine Aktualisierungsrate der Nachverfolgung kann an eine Bewegungsgeschwindigkeit der mobilen Plattform relativ zum Zielobjekt angepasst werden. Das erwähnte Verfahren erlaubt bis zu ca. 20 Neuberechnungen pro Sekunde und erlaubt damit das Nachverfolgen von schnellen Bewegungen. Die Aktualisierungsrate kann dabei insbesondere so gewählt werden, dass zwischen aufeinanderfolgenden Bildern keine zu große Lageveränderung des Objekts erfolgt, d. h. die Lageveränderung nur so groß ist, dass das Verfahren eine zuverlässige Nachverfolgung gewährleisten kann.

In Schritt 42 wird dann die Plattform zum Objekt bewegt. Hierzu können neben der Grobschätzung der Pose aus Schritt 41 LIDAR-Daten von dem LIDAR-Sensor 32 der Fig. 2 herangezogen werden. Zur Verarbeitung der LIDAR-Daten können SLAM-Techniken ("simultaneous localization and mapping") verwendet werden, um eine differenzielle Bewegung zum Objekt hin zu ermöglichen, wobei Hindernisse vermieden werden können. Hierzu können Robot Operating System(ROS)-Programme wie ROS Navigation Stack oder ROS Differential_Drive verwendet werden. Die Plattform kann mit derartigen Techniken bei manchen Ausführungsbeispielen mit einer Positioniergenauigkeit von ±10 mm zum Objekt in einer Bewegungsebene der Plattform positioniert werden.

In Schritt 43 erfolgt dann die bereits erwähnte Feinschätzung der Pose des Objekts. Diese kann von der Grobschätzung aus Schritt 41 ausgehen und diese weiter verfeinern. Hierzu können wieder Sensordaten herangezogen werden, wie Kameradaten. Bevorzugt wird dabei eine Kamera hoher Auflösung herangezogen, die beispielsweise in dem Instrumentenkopf 30 der Fig. 3 bereitgestellt sein kann. Zudem kann wiederum die digitale Repräsentation des Objekts in die Berechnung einfließen. In Schritt 43 können Verfahren wie Verfahren, die auf Kantendetektion basieren, zum Einsatz kommen. Ein Beispiel ist hier für das D²CO-Verfahren ("direct directional chamfer optimization"), welches auch mit texturfreien und glänzenden Objektoberflächen robuste Ergebnisse liefern kann.

In Schritt 44 wird dann basierend auf der in Schritt 43 geschätzten Pose des Objekts der Instrumentenkopf durch Steuern einer Kinematik wie der Kinematik 23 am Objekt ausgerichtet. Hierdurch ist eine Genauigkeit der Posenbestimmung bis zu ±0,1 mm bei manchen Ausführungsbeispielen möglich. Eine Positioniergenauigkeit kann dann ebenfalls in diesem Bereich liegen, wenn eine verwendete Kinematik zumindest ebenfalls eine derartige Genauigkeit erlaubt.

In Schritt 45 wird dann die Messung und/oder Bearbeitung des Objekts mittels des positionierten Instrumentenkopf und der daran befindlichen Sensoren und/oder Werkzeuge durchgeführt. Beispielsweise können Zwischenräume in einem Objekt vermessen werden, und/oder es kann detektiert werden, ob verschiedene Teile des Objekts bündig ausgerichtet sind.

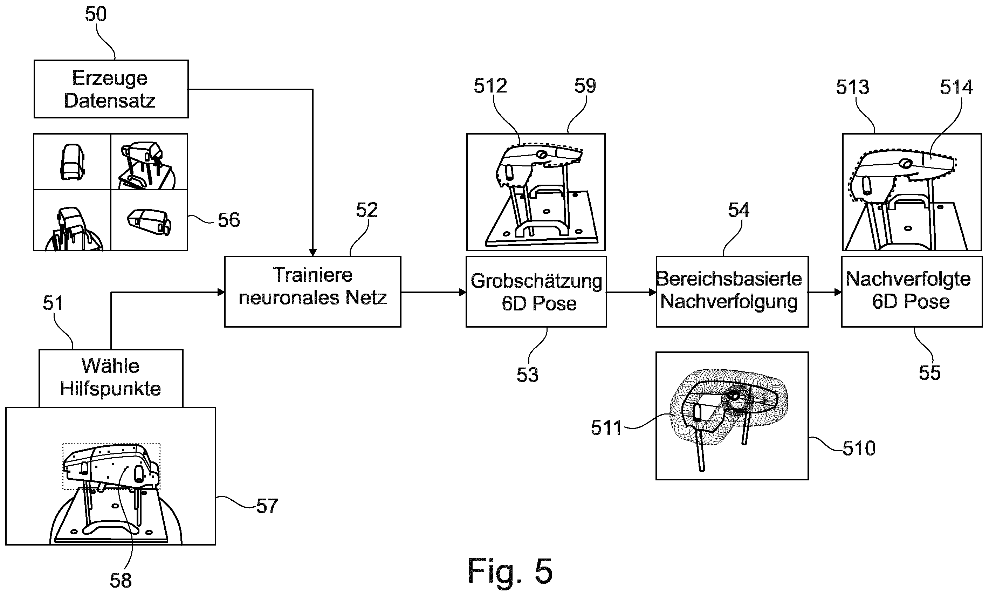

Ein Beispiel der Grobschätzung des Schritts 41 und einer möglichen Nachverfolgung der Pose wird nunmehr unter Bezugnahme auf die Fig. 5, 6, 7A und 7B erläutert.

In Schritt 50 der Fig. 5 werden, wie durch Bilder 56 symbolisiert, eine Vielzahl von Bildaufnahmen eines Objekts aus verschiedenen Richtungen erzeugt. Diese Vielzahl von Bilddaten aus verschiedenen Richtungen können als digitale Repräsentation des Objekts angesehen werden. Bei anderen Ausführungsformen können derartige Bilder virtuell aus einer vorhandenen digitalen Repräsentation erzeugt werden, z. B. aus 3D-CAD-Daten. Eine derartige Herangehensweise ist beispielsweise S. Thalhammer et al., "SyDPose: Object Detection and Pose Estimation in Cluttered Real-World Depth Images using only Synthetic Data", 2019 International Conference on 3D Vision, beschrieben. Das aufgenommene Objekt in den Bildern 56 ist dabei ein Exemplar eines später in der Produktion zu vermessenden Objekts, beispielsweise ein Prototyp oder ein Objekt aus einer Serienfertigung. Zu den Bildern wird jeweils die Pose des Objekts relativ zu einer Betrachterposition (im Falle von realen Bildern der Kameraposition, im Falle einer virtuellen Erzeugung einer virtuellen Beobachterposition) bereitgestellt. Bei der virtuellen Erzeugung kann diese Information ebenfalls mit erzeugt werden.

In Schritt 51 werden Hilfspunkte in den in Schritt 50 erzeugten Bildern automatisch erzeugt, die die Pose des Objekts insbesondere für das hier beschriebene Verfahren kennzeichnen. In einem Bild 57 können dies als Beispiel eine Vielzahl von 2D-Punkten 58 auf dem jeweiligen Bild des Objekts sein, die eine Pose des Objekts charakterisieren. Diese Hilfspunkte können beispielsweise Eckpunkte und Mittelpunkt einer das Objekt in dem Bild umschreibenden Boundingbox (in Bild 57 als Rechteck dargestellt) oder Punkte auf der Oberfläche des Objekts, beispielsweise auf Kanten, die im Bild durch Bilderkennung erkannt werden können, sein. Diese Hilfspunkte charakterisieren für das Verfahren die Pose des Objekts.

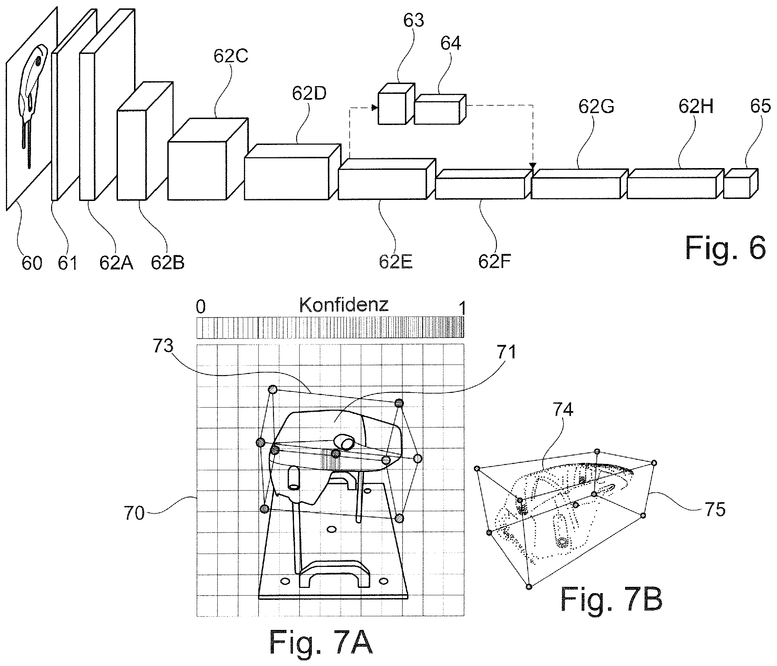

Auf Basis dieser Daten kann dann in Schritt 52 ein neuronales Netz zunächst trainiert und nach dem Training dann zur Bestimmung der Pose benutzt werden. Dabei werden beispielsweise die Posen der in Schritt 50 erzeugten Bilder mit den Hilfspunkten aus Schritt 51 korreliert, so dass dann nach dem Training für im Wesentlichen beliebige Bilder des Objekts die entsprechenden Hilfspunkte und somit die Pose ermittelt werden können. Ein derartiges neuronales Netz ist als Beispiel in der Fig. 6 dargestellt. Als Eingang erhält das neuronale Netz ein Bild 60 in einer Eingangsschicht 61. Aus einer Ausgangsschicht 65 werden dann beispielsweise die Hilfspunkte, die das Objekt beschreiben (siehe die Erläuterungen zu Bild 57 und Schritt 51) ausgegeben. Die Verarbeitung erfolgt über eine Vielzahl von Zwischenschichten 62A bis 62H, wobei auch Verzweigungen, siehe Schichten 63, 64, auftreten können. Diese Schichten 62A bis 62H, 63, 64 werden als verborgene Schichten ("hidden layers") des neuronalen Netzes bezeichnet. In den Schichten kann dabei die Dimensionalität des Problems verändert werden. Das dargestellte neuronale Netzwerk kann als CNN ("convolutional neural network") ausgestaltet sein und beispielsweise entsprechend dem YOLO-Verfahren arbeiten. Als Ergebnis erhält man, wie in den Fig. 7A und 7B gezeigt, eine um das Objekt 71 herum dargestellte 3D-Boundingbox als Quader 73 in dem Bild 70 mit den geschätzten Eckpunkten des Quaders 73, welches die Pose des Objekts repräsentiert. Zur Veranschaulichung ist die 3D-Lage auf das 2D-Bild zurückprojiziert.

Fig. 7A und B zeigen also ein Beispiel für eine Ausgabe des trainierten Netzwerks. Dabei sind in Fig. 7A die 2D-Punkte im Bild visualisiert, die gemäß Fig. 7B die entsprechende 3D-Repräsentanz haben - hier gemäß einem Beispiel, bei dem die Hilfspunkte so definiert sind, dass sie die Eckpunkte der 3D-Bounding-Box entsprechend dem Quader 73 widerspiegeln.

Aus einem aufgenommenen Bild wie dem Bild 59 der Fig. 5 ergibt sich dann in Schritt 53 mittels des trainierten neuronalen Netzes, dem das Bild zugeführt wird, eine Grobschätzung der Pose in den sechs Koordinaten (6D), d. h. drei Translationskoordinaten und drei Winkelkoordinaten. Wie schematisch als Beispiel gezeigt approximiert die geschätzte Pose wie durch eine gestrichelte Linie 512 symbolisiert die tatsächliche Pose des Objekts schon relativ gut, ist aber durchaus noch fehlerbehaftet.

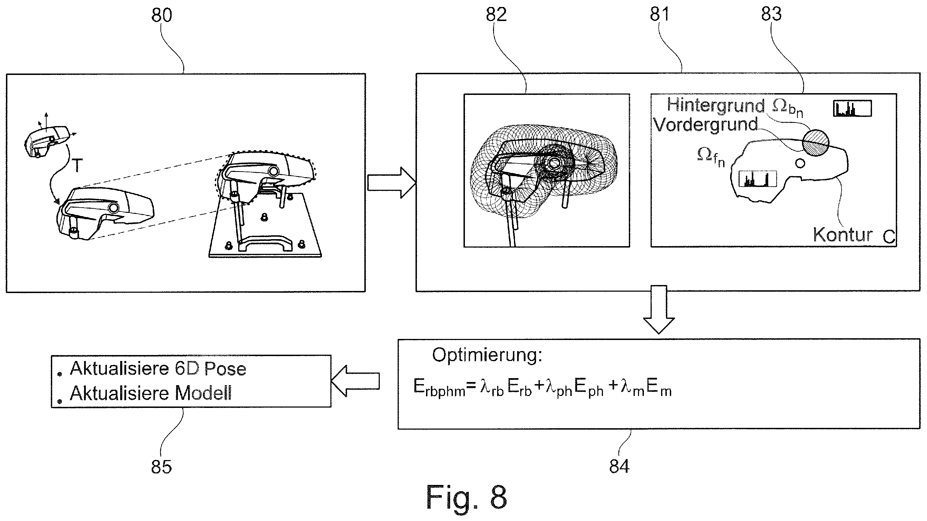

Wie bereits erläutert kann dann eine bereichsbasierte Nachverfolgung der Pose in Schritt 41 nachfolgen. Hierfür kann wie in einem Bild 510 durch Kreise 511 angedeutet Bereiche um die Kontur der Pose des Objekts herum ausgearbeitet werden und hier Vordergrund und Hintergrund unterschieden werden. Dies ist in Fig. 8 näher erläutert.

Ein Block 80 der Fig. 8 symbolisiert die Grobschätzung der Pose, wo beispielsweise die digitale Repräsentation durch eine Transformation T an das Bild angepasst wird und somit die Transformation T (Translation und Rotation) die geschätzte Pose repräsentiert. In einem Block 81 werden dann Bereiche ausgewertet. Das Bild 82 entspricht dabei dem Bild 510 der Fig. 5, wobei die einzelnen Kreise einzelne Bereiche darstellen. Wie in einem Bild 83 angedeutet können dann für die einzelnen Kreise Histogramme im Übergangsbereich von Vorder- und Hintergrund erstellt werden und somit die Kontur des Objekts besser bestimmt werden. Dies kann mit einer Optimierung wie in einem Block 84 ausgedrückt geschehen. Als zu optimierende Kostenfunktion ist hier eine Funktion E_{rbphm} angegeben, die aus drei Komponenten besteht. Dabei repräsentiert E_{rb} eine Kostenfunktion einer bereichbasierten Posenerkennung wie in Block 81 dargestellt, mit einem Gewichtungsfaktor λ_{rb}, Eₚₕ repräsentiert eine Kostenfunktion einer photometrischen Posenerkennung mit einem Gewichtungsfaktor λₚₕ, und Eₘ repräsentiert eine Kostenfunktion einer Bewegungskomponente, mit einem Gewichtungsfaktor λₘ. Die Gewichtungsfaktoren werden eingestellt, um die Kostenfunktionen relativ zueinander zu gewichten.

Die photometrische Posenerkennung beruht auf der Annahme, dass die Farben irgendeines Oberflächenpunktes des Objekts in jedem Bild unabhängig von der Perspektive ähnlich sind (dies wird als photometrische Konsistenz bezeichnet). Die Kostenfunktion repräsentiert den pixelweise photometrischen Fehler in Abhängigkeit von den Posenparametern (Translation und Orientierung), welche optimiert werden.

Die Bewegungskomponente repräsentiert Informationen über die Bewegung einer Kamera, die zur Bildaufnahme verwendet wird, beispielsweise basierend auf Sensoren wie Trägheitssensoren (IMU, intertial measurement unit) oder anderen Bewegungssensoren der Vorrichtung, beispielsweise der mobilen Plattform oder der Kinematik.

Hieraus ergibt sich in einem Block 85 eine aktualisierte 6D-Pose. Zudem kann auch die digitale Repräsentation, hier als Modell bezeichnet, aktualisiert werden.

Wiederum auf Fig. 5 bezugnehmend ergibt sich daraus in Schritt 55 eine nachverfolgte 6D-Pose, wie in einem Bild 513 gezeigt. Auch wenn sich das Objekt verglichen mit dem Bild 512 relativ zu der Bildaufnahme bewegt hat, stimmt die Pose, hier repräsentiert durch eine Kontur 514, sogar besser mit dem Objekt überein als in Bild 59.

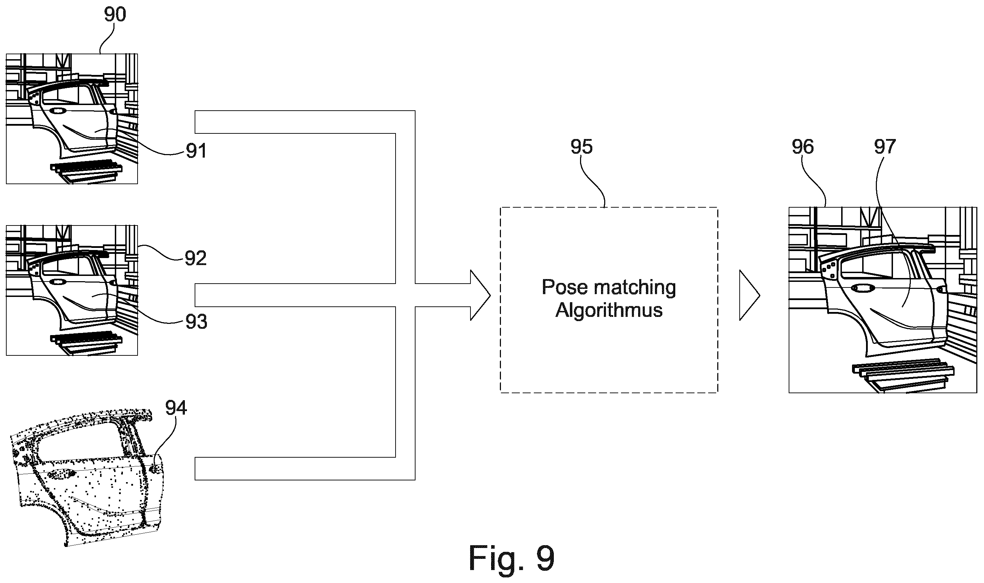

Als nächstes werden Herangehensweisen für die Feinschätzung in Schritt 43 der Fig. 4 näher erläutert. Fig. 9 zeigt eine Herangehensweise für die Feinschätzung gemäß einem Ausführungsbeispiel.

Als Eingänge werden hier ein hochaufgelöstes Eingangsbild 90, in dem ein Zielobjekt 91, in diesem Fall eine Autotür, zu sehen ist, verwendet. Dieses Eingangsbild 90 wird mit einer Kamera der Vorrichtung aufgenommen. Des Weiteren wird als Eingangsinformation, wie in einem Bild 92 dargestellt, die Grobschätzung der Pose, hier durch eine Kontur 93 repräsentiert, welche in Schritt 41 erhalten wurde, verwendet. Schließlich wird eine digitale Repräsentation 94 herangezogen, Diese Eingangsinformationen werden einem Pose-Matching-Algorithmus 95 zugeführt, für den Beispiele später näher erläutert werden. Hieraus ergibt sich dann, wie in einem Bild 96 dargestellt, die Feinschätzung der Pose, hier durch eine Kontur 97 repräsentiert.

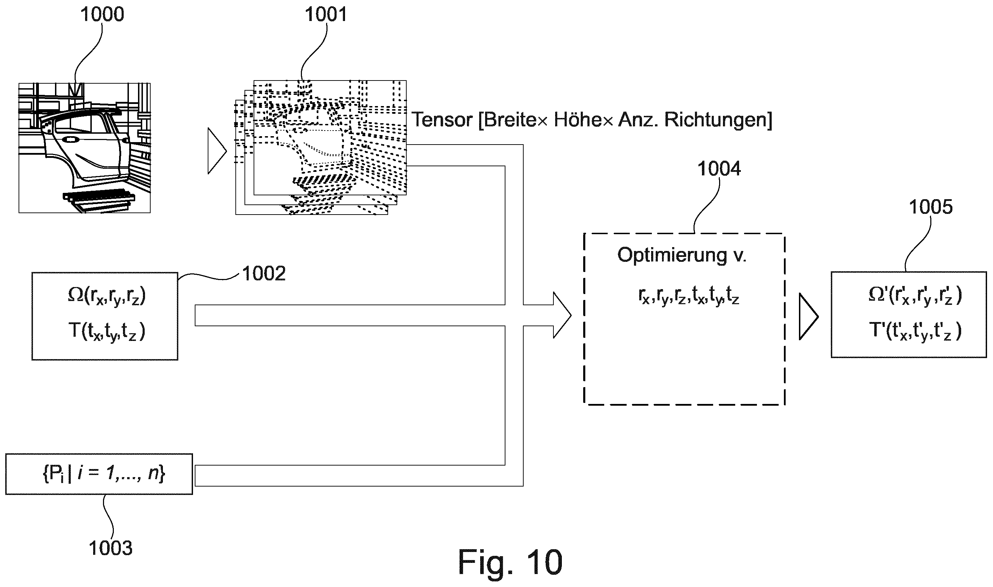

Die Fig. 10 zeigt eine Implementierungsmöglichkeit der Herangehensweise der Fig. 9 mit dem bereits erwähnten D²CO-Verfahren. Ein hochauflösendes Eingangsbild wird durch Kantenanalyse in verschiedenen Richtungen zu einem richtungsabhängigen Kantenabstandstensor (im Englischen "directional chamfer distance tensor") , durch Bild 1001 repräsentiert, verarbeitet, der ein dreidimensionaler Tensor mit Dimensionen Breite mal Höhe des Bildes mal die Anzahl der ausgewerteten Richtungen ist. Dieser Tensor, die anfängliche Pose angegeben durch einen Translationsvektor T mit Komponenten tₓ, t_{y} und t_{z} und einen Orientierungsvektor Ω mit Orientierungskoordinaten rₓ, r_{y}, r_{z} und ein Modell des Objekts 1003, welches beispielsweise als Wolke von n 3D-Punkten **Pᵢ** bereitgestellt ist werden einem Optimierungsverfahren 1004 zugeführt, welches die Vektorkomponenten der Pose, d. h. rₓ, r_{y}, r_{z}, tₓ, t_{y}, t_{z} optimiert. Als Optimierungsverfahren wird dem in Fig. 10 dargestellten Fall das sogenannte "Powell's dog leg"-Verfahren verwendet.

Alternativ kann auch ein anderes Verfahren, beispielsweise das Levenberg-Marquardt-Verfahren verwendet werden. Als Ergebnis ergibt sich dann eine verfeinerte Pose 1005 mit entsprechend verfeinerten Vektoren T und Ω, die zur Unterscheidung von der anfänglichen Pose 1002 jeweils mit einem Apostroph (') gekennzeichnet sind.

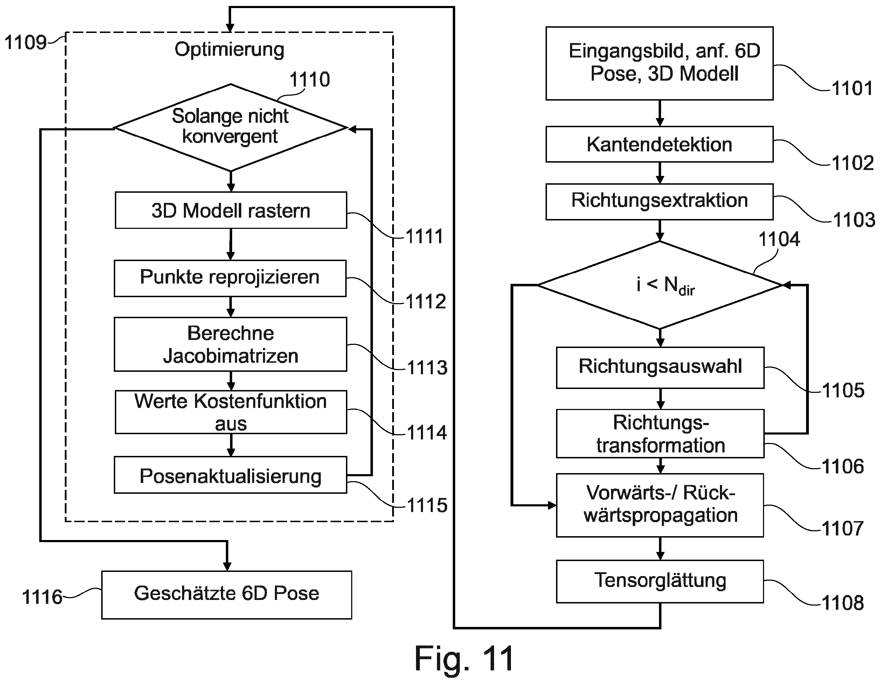

Die Fig. 11 zeigt hierzu ein Flussdiagram der Anwendung des D²CO-Verfahrens, wie es auch in Fig. 10 dargestellt ist, auf die Feinschätzung der Pose des Objekts. In Schritt 1101 werden als Eingangswerte ein hochaufgelöstes Eingangsbild, eine anfängliche Pose aus der Grobschätzung und eine digitale Repräsentation, beispielsweise ein 3D-Modell, bereitgestellt, wie dies bereits in den Fig. 9 und 10 erläutert wurde. Dann erfolgt die Bestimmung des Tensors 1001 der Fig. 10. In Schritt 1102 werden hierzu Kanten in dem Eingangsbild detektiert. Hierzu können herkömmliche Kantendetektionsverfahren verwendet werden.

In Schritt 1103 erfolgt dann eine Richtungsextraktion, d. h. verschiedene Richtungen, in die sich das Modell erstreckt, werden erkannt.

Dann erfolgt eine Schleife 1104, welche über alle Richtungen läuft, wobei N_{dir} die Anzahl der in Schritt 1103 extrahierten Richtungen ist. Für jeden Durchlauf wird in Schritt 1105 eine der Richtungen unter Verwendung einer Harris-Transformation ausgewählt. Dann folgt eine Richtungstransformation in Schritt 1106. Dabei wird eine euklidische 2D-Richtungstransformation für jede Kombination aus Richtung und detektierten Kanten, auch als Richtungs-Kanten-Karte bezeichnet. Die Karten werden dann zu einem Directional Chamfer Direction (DCD)-Tensor wie in Bild 1001 repräsentiert gestapelt.

Dem folgt eine Vorwärts/Rückwärtspropagation in Schritt 1107. Bei dieser wird der DCD-Tensor basierend auf den 2D-Transformationen aus Schritt 1106 und den Richtungen der detektierten Kanten berechnet. Am Ende erfolgt in Schritt 1108 eine Glättung des Tensors entsprechend seiner Orientierung, wofür ein einfaches Gauss-Filter verwendet werden kann. Dieser Tensor wird dann einem nichtlinearen Optimierungsverfahren 1109 zugeführt, entsprechende der Optimierung 1004 der Fig. 10. Diese läuft wie bereits erwähnt nach dem "Powell's dog leg"-Verfahren oder nach einem anderen Verfahren wie dem Levenberg-Marquardt-Verfahren.

Die Optimierung beinhaltet eine Optimierungsschleife 1110, solange die Pose nicht ausreichend konvergiert (beispielsweise solange sich die Komponenten der Vektoren T und Ω noch um mehr als einen vorgegebenen Betrag oder eine vorgegebene relative Größe pro Durchlauf ändert). In jedem Durchlauf der Schleife wird in Schritt 1111 die digitale Repräsentation, Beispiel 3D-Modell, gerastert. Dabei werden n Beispielpunkte extrahiert.

In Schritt 112 werden die Punkte des 3D-Modells reprojiziert, wofür die in Schritt 1111 ausgewählten Beispielpunkt unter Benutzung der momentanen Pose T, Ω und Kalibrierungsdaten einer verwendeten Kamera auf Kanten im 2D-Bildraum projiziert und ihre Richtungen berechnet. In Schritt 1113 werden Jacobi-Matrizen bezüglich T und Ω berechnet. In Schritt 1114 wird dann eine entsprechende Kostenfunktion ausgewertet, auf deren Basis in Schritt 1115 eine Aktualisierung der Pose erfolgt. Als Ergebnis wird in Schritt 1116 dann die Feinschätzung der Pose erhalten.

Da das D²CO-Verfahren im Übrigen ein für sich bekanntes Verfahren ist, ist die obige Erläuterung vergleichsweise kurz gehalten. Wie bereits erwähnt können auch andere Verfahren zum Einsatz kommen, oder das D²CO Verfahren kann mit anderen Verfahren, z. B. Gewichtung von Kanten oder so genanntem Annealing (randomisierte Delta-Transformationen) oder systematischen Offsets, kombiniert werden, was die Robustheit erhöhen kann. Andere Verfahren umfassen Oriented Chamfer Matching wie in H. Kai et al., "Fast Detection of Multiple Textureless3-D Objects", Proceedings of the 9th International Conference on Computer Vision Systems (ICVS), 2013 beschrieben, Fast Directional Chamfer matching wie in M.-Y. Liu et al., "Fast Object Localization and PoseEstimation in Heavy Clutter for Robotic BinPicking", Mitsubishi Electric Research Laboratories TR2012-00, 2012. beschrieben, oder Point-Pair-Features Matching. Der letztgenannte Ansatz besteht darin, 3D-Featurepunkte nach einer gewissen Strategie oder nach dem Zufallsprinzip aus Tiefenbildern zu extrahieren. Diese beobachteten Featurepunkte werden nach einem effizienten Verfahren auf die digitale Repräsentation des Objekts (sichtbare Oberfläche des CAD-Modells) angepasst; zur beschleunigten Berechnung zur Laufzeit können dabei Hash-Tabellen zur Zuordnung von Punktepaaren zum Einsatz kommen. Zusätzlich nutzt dieser Ansatz verschiedene ICP-Algorithmen zur Posenregistrierung (Iterative Closest Point) wie "Picky-ICP" oder "BC-ICP" (ICP mit biunique Korrespondenzen). Ein solches Verfahren ist in B. Drost et al., "Model Globally, Match Locally: Efficient and Robust 3D Object Recognition" beschrieben, veröffentlicht auf http://campar.in.tum.de/pub/drost2010CVPR/drost2010CVPR.pdf.

Es wird nochmals darauf hingewiesen, dass die obigen Ausführungsbeispiele, insbesondere Vordetails verwendeter Verfahren, nur der Veranschaulichung dienen und auch andere Verfahren verwendet werden können.

## Patentansprüche

1. Vorrichtung (22) zur Vermessung, Inspektion und/oder Bearbeitung von Objekten, umfassend:
eine mobile Plattform (24) zum Bewegen der Vorrichtung durch einen Raumbereich, eine an der mobilen Plattform (24) angebrachte Kinematik (23), und einen an der Kinematik (23) angebrachten Instrumentenkopf (25; 30), wobei die Kinematik (23) eingerichtet ist, den Instrumentenkopf (25; 30) relativ zu der mobilen Plattform (24) zu bewegen,
mindestens einen an der mobilen Plattform (24) oder der Kinematik (23) angebrachten Sensor (32-34) und eine an der mobilen Plattform (24) oder der Kinematik (23) angebrachte Kamera hoher Auflösung, und
eine Steuerung (31), welche eingerichtet ist:
einer erste Abschätzung einer Pose eines Zielobjekts (20, 21; 91) auf Basis von Signalen von dem mindestens einen Sensor (32-34) zu bestimmen, die mobile Plattform (24) auf Basis der ersten Abschätzung anzusteuern, sich zu dem Zielobjekt zu bewegen, eine zweite, genauere Abschätzung der Pose des Zielobjekts auf Basis von Signalen von der Kamera hoher Auflösung und der ersten Abschätzung zu bestimmen und die Kinematik (23) anzusteuern, wobei das Bestimmen der ersten Abschätzung und das Bestimmen der zweiten Abschätzung zudem auf Basis einer digitalen Repräsentation (36; 94; 1003) des Zielobjekts (20, 21; 91) erfolgt, und den Instrumentenkopf auf Basis der zweiten Abschätzung an dem Zielobjekt (20, 21; 91) durch die Ansteuerung der Kinematik zu positionieren, und wobei die Steuerung (31) weiter eingerichtet ist, die Pose des Zielobjekts (20, 21; 91) während dem Bewegen der mobilen Plattform und/oder während einer Bewegung der Kinematik (23) nachzuverfolgen.

2. Vorrichtung nach Anspruch 1, wobei die Steuerung (31) eingerichtet ist, vor dem Bestimmen der ersten Abschätzung das Zielobjekt (20, 21; 91) in einem Bild zu identifizieren und die erste Abschätzung auf Basis des identifizierten Zielobjekts zu bestimmen.

3. Vorrichtung nach Anspruch 1 oder 2, wobei die Steuerung (31) eingerichtet ist, vor dem Bestimmen der ersten Abschätzung eine Distanz des Zielobjekts (20, 21; 91) zu der Vorrichtung (22) auf Basis einer Messung des mindestens einen Sensors (32-34) zu bestimmen.

4. Vorrichtung nach einem der Ansprüche 1 bis 3, wobei der mindestens eine Sensor einen LIDAR-Sensor und/oder eine Kamera umfasst.

5. Vorrichtung nach einem der Ansprüche 1 bis 4, wobei die Steuerung (31) eingerichtet ist, die Pose mittels einer bereichsbasierten Nachverfolgung nachzuverfolgen.

6. Vorrichtung nach einem der Ansprüche 1 bis 5, wobei die Steuerung (31) eine trainierte Maschinenlernlogik zum Bestimmen der ersten Abschätzung und/oder der zweiten Abschätzung umfasst.

7. Vorrichtung nach einem der Ansprüche 1 bis 6, wobei das Bestimmen der zweiten Abschätzung auf Basis des Bildes oder eines weiteren Bildes des Zielobjekts (20, 21; 91), der digitalen Repräsentation (36; 94; 1003) und der ersten Abschätzung erfolgt.

8. Vorrichtung nach Anspruch 7, wobei das Bestimmen der zweiten Abschätzung auf Basis einer directional chamfer Optimierung erfolgt.

9. Verfahren zum Steuern einer Vorrichtung (22) zur Vermessung, Inspektion und/oder Bearbeitung von Objekten, wobei die Vorrichtung eine mobile Plattform (24) zum Bewegen der Vorrichtung durch einen Raumbereich, eine an der mobilen Plattform (24) angebrachte Kinematik (23), und einen an der Kinematik (23) angebrachten Instrumentenkopf (25; 30), wobei die Kinematik (23) eingerichtet ist, den Instrumentenkopf (25; 30) relativ zu der mobilen Plattform (24) zu bewegen, und wobei die Vorrichtung mindestens einen an der mobilen Plattform (23) oder der Kinematik (23) angebrachten Sensor (32-34) und eine an der mobilen Plattform (23) oder der Kinematik (23) angebrachte Kamera hoher Auflösung aufweist, wobei das Verfahren umfasst:
Bestimmen einer ersten Abschätzung einer Pose eines Zielobjekts (20, 21; 91) auf Basis von Signalen von dem mindestens einen Sensor (32-34),
Ansteuern der mobilen Plattform (24) auf Basis der ersten Abschätzung, sich zu dem Zielobjekt zu bewegen,
Bestimmen einer zweiten, genaueren Abschätzung der Pose des Zielobjekts auf Basis von Signalen von der Kamera hoher Auflösung und der ersten Abschätzung, wobei das Bestimmen der ersten Abschätzung und das Bestimmen der zweiten Abschätzung zudem auf Basis einer digitalen Repräsentation (36; 94; 1003) des Zielobjekts (20, 21; 91) erfolgt, und
Ansteuern der Kinematik (23), um den Instrumentenkopf auf Basis der zweiten Abschätzung an dem Zielobjekt (20, 21; 91) zu positionieren, und
Nachverfolgen der Pose des Zielobjekts (20, 21; 91) während dem Bewegen der mobilen Plattform und/oder während einer Bewegung der Kinematik (23).

10. Verfahren nach Anspruch 9, weiter umfassend, vor dem Bestimmen der ersten Abschätzung, Identifizieren des Zielobjekts (20, 21; 91) in einem Bild, wobei die erste Abschätzung auf Basis des identifizierten Zielobjekts zu bestimmt wird.

11. Verfahren nach Anspruch 9 oder 10, weiter umfassend, vor dem Bestimmen der ersten Abschätzung, Bestimmen einer Distanz des Zielobjekts (20, 21; 91) zu der Vorrichtung (22) auf Basis einer Messung des mindestens einen Sensors (32-34).

12. Verfahren nach einem der Ansprüche 9 bis 11, wobei das Nachverfolgen ein bereichsbasiertes Nachverfolgen umfasst.

13. Verfahren nach einem der Ansprüche 9 bis 12, wobei das Bestimmen der ersten Abschätzung ein Verwenden einer Maschinenlernlogik umfasst.

14. Verfahren nach einem der Ansprüche 9 bis 13, wobei das Bestimmen der zweiten Abschätzung auf Basis des Bildes oder eines weiteren Bildes des Zielobjekts (20, 21; 91), der digitalen Repräsentation und der ersten Abschätzung erfolgt.

15. Verfahren nach Anspruch 14, wobei das Bestimmen der zweiten Abschätzung auf Basis einer directional chamfer Optimierung erfolgt.

## Claims

1. Apparatus (22) for measuring, inspecting and/or processing objects, comprising:
a mobile platform (24) for moving the apparatus through a spatial region, a kinematic system (23) attached to the mobile platform (24), and an instrument head (25; 30) attached to the kinematic system (23), wherein the kinematic system (23) is configured to move the instrument head (25; 30) relative to the mobile platform (24),
at least one sensor (32-34) attached to the mobile platform (24) or the kinematic system (23) and a high-resolution camera attached to the mobile platform (24) or the kinematic system (23), and
a controller (31) configured:
to determine a first estimation of a pose of a target object (20, 21; 91) on the basis of signals from the at least one sensor (32-34), to control the mobile platform (24) on the basis of the first estimation to move to the target object, to determine a second, more accurate estimation of the pose of the target object on the basis of signals from the high-resolution camera and the first estimation and to control the kinematic system (23), wherein determining the first estimation and determining the second estimation are additionally effected on the basis of a digital representation (36; 94; 1003) of the target object (20, 21; 91), and to position the instrument head at the target object (20, 21; 91) on the basis of the second estimation by way of the control of the kinematic system, and wherein the controller (31) is further configured to track the pose of the target object (20, 21; 91) during the movement of the mobile platform and/or during a movement of the kinematic system (23).

2. Apparatus according to Claim 1, wherein the controller (31) is configured to identify the target object (20, 21; 91) in an image before determining the first estimation and to determine the first estimation on the basis of the identified target object.

3. Apparatus according to Claim 1 or 2, wherein the controller (31) is configured to determine a distance between the target object (20, 21; 91) and the apparatus (22) on the basis of a measurement of the at least one sensor (32-34) before determining the first estimation.

4. Apparatus according to any of Claims 1 to 3, wherein the at least one sensor comprises a LIDAR sensor and/or a camera.

5. Apparatus according to any of Claims 1 to 4, wherein the controller (31) is configured to track the pose by means of region-based tracking.

6. Apparatus according to any of Claims 1 to 5, wherein the controller (31) comprises a trained machine learning logic for determining the first estimation and/or the second estimation.

7. Apparatus according to any of Claims 1 to 6, wherein determining the second estimation is effected on the basis of the image or a further image of the target object (20, 21; 91), the digital representation (36; 94; 1003) and the first estimation.

8. Apparatus according to Claim 7, wherein determining the second estimation is effected on the basis of a directional chamfer optimization.

9. Method for controlling an apparatus (22) for measuring, inspecting and/or processing objects, wherein the apparatus comprises a mobile platform (24) for moving the apparatus through a spatial region, a kinematic system (23) attached to the mobile platform (24), and an instrument head (25; 30) attached to the kinematic system (23), wherein the kinematic system (23) is configured to move the instrument head (25; 30) relative to the mobile platform (24), and wherein the apparatus comprises at least one sensor (32-34) attached to the mobile platform (23) or the kinematic system (23) and a high-resolution camera attached to the mobile platform (23) or the kinematic system (23), wherein the method comprises:
determining a first estimation of a pose of a target object (20, 21; 91) on the basis of signals from the at least one sensor (32-34),
controlling the mobile platform (24) on the basis of the first estimation to move to the target object,
determining a second, more accurate estimation of the pose of the target object on the basis of signals from the high-resolution camera and the first estimation, wherein determining the first estimation and determining the second estimation are additionally effected on the basis of a digital representation (36; 94; 1003) of the target object (20, 21; 91), and
controlling the kinematic system (23) in order to position the instrument head at the target object (20, 21; 91) on the basis of the second estimation, and
tracking the pose of the target object (20, 21; 91) during the movement of the mobile platform and/or during a movement of the kinematic system (23).

10. Method according to Claim 9, further comprising, before determining the first estimation, identifying the target object (20, 21; 91) in an image, wherein the first estimation is determined on the basis of the identified target object.

11. Method according to Claim 9 or 10, further comprising, before determining the first estimation, determining a distance between the target object (20, 21; 91) and the apparatus (22) on the basis of a measurement of the at least one sensor (32-34).

12. Method according to any of Claims 9 to 11, wherein the tracking comprises region-based tracking.

13. Method according to any of Claims 9 to 12, wherein determining the first estimation comprises using a machine learning logic.

14. Method according to any of Claims 9 to 13, wherein determining the second estimation is effected on the basis of the image or a further image of the target object (20, 21; 91), the digital representation and the first estimation.

15. Method according to Claim 14, wherein determining the second estimation is effected on the basis of a directional chamfer optimization.

## Revendications

1. Dispositif (22) pour mesurer, inspecter et/ou traiter des objets, comprenant :
une plateforme mobile (24) pour déplacer le dispositif à travers une région de l'espace,
un système cinématique (23) fixé à la plateforme mobile (24), et une tête d'instrument (25 ; 30) fixée au système cinématique (23), le système cinématique (23) étant conçu pour déplacer la tête d'instrument (25 ; 30) par rapport à la plateforme mobile (24),
au moins un capteur (32-34) fixé à la plateforme mobile (24) ou au système cinématique (23) et une caméra haute résolution fixée à la plateforme mobile (24) ou au système cinématique (23), et
une unité de commande (31), qui est conçue pour :
déterminer une première estimation d'une pose d'un objet cible (20, 21 ; 91) sur la base de signaux provenant de l'au moins un capteur (32-34), commander la plateforme mobile (24) sur la base de la première estimation pour qu'elle se déplace vers l'objet cible, déterminer une deuxième estimation, plus précise, de la pose de l'objet cible sur la base de signaux provenant de la caméra haute résolution et de la première estimation, et commander le système cinématique (23), la détermination de la première estimation et la détermination de la deuxième estimation s'effectuant en outre sur la base d'une représentation numérique (36 ; 94 ; 1003) de l'objet cible (20, 21 ; 91), et positionner la tête d'instrument sur l'objet cible (20, 21 ; 91) sur la base de la deuxième estimation en commandant le système cinématique, et l'unité de commande (31) étant en outre conçue pour suivre la pose de l'objet cible (20, 21 ; 91) pendant le déplacement de la plateforme mobile et/ou pendant un mouvement du système cinématique (23).

2. Dispositif selon la revendication 1, dans lequel l'unité de commande (31) est conçue pour identifier l'objet cible (20, 21 ; 91) dans une image avant la détermination de la première estimation et pour déterminer la première estimation sur la base de l'objet cible identifié.

3. Dispositif selon la revendication 1 ou 2, dans lequel l'unité de commande (31) est conçue pour déterminer, avant la détermination de la première estimation, une distance de l'objet cible (20, 21 ; 91) par rapport au dispositif (22) sur la base d'une mesure de l'au moins un capteur (32-34).

4. Dispositif selon l'une quelconque des revendications 1 à 3, dans lequel l'au moins un capteur comprend un capteur LIDAR et/ou une caméra.

5. Dispositif selon l'une quelconque des revendications 1 à 4, dans lequel l'unité de commande (31) est conçue pour suivre la pose au moyen d'un suivi à base de région.

6. Dispositif selon l'une quelconque des revendications 1 à 5, dans lequel l'unité de commande (31) comprend une logique d'apprentissage automatique entraînée pour déterminer la première estimation et/ou la deuxième estimation.

7. Dispositif selon l'une quelconque des revendications 1 à 6, dans lequel la détermination de la deuxième estimation s'effectue sur la base de l'image ou d'une autre image de l'objet cible (20, 21 ; 91), de la représentation numérique (36 ; 94 ; 1003) et de la première estimation.

8. Dispositif selon la revendication 7, dans lequel
la détermination de la deuxième estimation s'effectue sur la base d'une optimisation de chanfrein directionnel.

9. Procédé pour commander un dispositif (22) pour mesurer, inspecter et/ou traiter des objets, le dispositif comprenant une plateforme mobile (24) pour déplacer le dispositif à travers une région de l'espace, un système cinématique (23) fixé à la plateforme mobile (24), et une tête d'instrument (25 ; 30) fixée au système cinématique (23), le système cinématique (23) étant conçu pour déplacer la tête d'instrument (25 ; 30) par rapport à la plateforme mobile (24), et le dispositif comprenant au moins un capteur (32-34) fixé à la plateforme mobile (23) ou au système cinématique (23) et une caméra haute résolution fixée à la plateforme mobile (23) ou au système cinématique (23), le procédé comprenant :
la détermination d'une première estimation d'une pose d'un objet cible (20, 21 ; 91) sur la base de signaux provenant de l'au moins un capteur (32-34),
la commande de la plateforme mobile (24) sur la base de la première estimation pour qu'elle se déplace vers l'objet cible,
la détermination d'une deuxième estimation, plus précise, de la pose de l'objet cible sur la base de signaux provenant de la caméra haute résolution et de la première estimation, la détermination de la première estimation et la détermination de la deuxième estimation s'effectuant en outre sur la base d'une représentation numérique (36 ; 94 ; 1003) de l'objet cible (20, 21 ; 91), et
la commande du système cinématique (23) pour positionner la tête d'instrument sur l'objet cible (20, 21 ; 91) sur la base de la deuxième estimation, et
le suivi de la pose de l'objet cible (20, 21 ; 91) pendant le déplacement de la plateforme mobile et/ou pendant un mouvement du système cinématique (23).

10. Procédé selon la revendication 9, comprenant en outre, avant la détermination de la première estimation, l'identification de l'objet cible (20, 21 ; 91) dans une image, la première estimation étant déterminée sur la base de l'objet cible identifié.

11. Procédé selon la revendication 9 ou 10, comprenant en outre, avant la détermination de la première estimation, la détermination d'une distance de l'objet cible (20, 21 ; 91) par rapport au dispositif (22) sur la base d'une mesure de l'au moins un capteur (32-34).

12. Procédé selon l'une quelconque des revendications 9 à 11, dans lequel le suivi comprend un suivi à base de région.

13. Procédé selon l'une quelconque des revendications 9 à 12, dans lequel la détermination de la première estimation comprend l'utilisation d'une logique d'apprentissage automatique.

14. Procédé selon l'une quelconque des revendications 9 à 13, dans lequel la détermination de la deuxième estimation s'effectue sur la base de l'image ou d'une autre image de l'objet cible (20, 21 ; 91), de la représentation numérique et de la première estimation.

15. Procédé selon la revendication 14, dans lequel la détermination de la deuxième estimation s'effectue sur la base d'une optimisation de chanfrein directionnel.
